# EUROPEAN PATENT APPLICATION

(11) **EP 4 593 109 A1**
(43) Date of publication of application: **30.07.2025**
(21) Application number: 23867388.3
(22) Date of filing: 14.09.2023
(51) Int. Cl.: H01M 4/36, H01M 4/525, H01M 4/62, H01M 10/0525, H01M 4/131

(54) **COMPOSITE NEGATIVE ELECTRODE MATERIAL, AND PREPARATION METHOD THEREFOR AND USE THEREOF**

(30) Priority: 22.09.2022 CN 202211155306
(71) Applicant: BTR New Material Group Co., Ltd., Shenzhen, Guangdong 518106 (CN); Dingyuan New Energy Technology Co., Ltd., Huizhou, Guangdong 516227 (CN)
(72) Inventor: CHEN, Xi, Shenzhen, Guangdong 518106 (CN); PANG, Chunlei, Shenzhen, Guangdong 518106 (CN); KONG, Yiming, Shenzhen, Guangdong 518106 (CN); REN, Jianguo, Shenzhen, Guangdong 518106 (CN); HE, Xueqin, Shenzhen, Guangdong 518106 (CN)
(74) Representative: Zaboliene, Reda
(86) International application number: PCT/CN2023/118837
(87) International publication number: WO 2024/061099

(57) **Abstract**

A composite negative electrode material, and a preparation method therefor and the use thereof, which belong to the technical field of batteries. **The** composite negative electrode material comprises an inner core and a coating layer located on at least part of the surface of the inner core, wherein the inner core comprises a porous carbon and Si particles, and the Si particles are distributed on the surface and/or in the pores of the porous carbon. **The** composite negative electrode material is provided with micropores and mesopores, wherein the ratio of the pore volume of the micropores to the pore volume of the mesopores is (2-50):(50-98). **The** oil absorption value of the composite negative electrode material is smaller than the oil absorption value of the composite negative electrode material in which the Si particles are removed, and the difference between the oil absorption value of the composite negative electrode material in which the Si particles are removed and the oil absorption value of the composite negative electrode material is ≥10%, based on the fact that the oil absorption value of the composite negative electrode material in which the Si particles are removed is 100%. **The** composite negative electrode material utilizes the porous characteristic of porous carbon to provide space for the volume expansion of Si, and further utilizes porous carbon having a certain strength as a framework to further ensure the stability of the whole composite negative electrode material, such that the cycle performance of the composite negative electrode material is improved.

## Description

This application claims priority to the Chinese patent application submitted to the China State Intellectual Property Administration on September 22, 2022, with the Application No. 2022111553065 and the patent name "COMPOSITE NEGATIVE ELECTRODE MATERIAL, AND PREPARATION METHOD THEREFOR AND USE THEREOF", the entire contents of which are hereby incorporate by reference.

### TECHNICAL FIELD

This application relates to the technical field of battery technology, and in particular to a composite negative electrode material, and preparation method therefor and use thereof.

### BACKGROUND

Lithium-ion batteries have the advantages of high energy density, long cycle life, low environmental pollution and no memory effect, so they are widely used in electric vehicles and consumer electronics. Traditional negative electrode carbon materials limit their widespread use due to their low theoretical specific capacity (372mAh/g). In order to increase the energy density of lithium-ion batteries, people began to look for high-capacity negative electrode materials, and silicon-based negative electrode materials have gradually become a research hotspot because of their theoretical specific capacity of up to 4200mAh/g.

However, the volume expansion of the silicon-based negative electrode materials during the alloying process with lithium is relatively large, and as the cycle proceeds, the negative electrode materials will undergo attenuation mechanisms such as pulverization, contact loss with the conductive agents and current collectors, and the formation of an unstable solid electrolyte interface (SEI), so the cycle performance of silicon-based negative electrode materials is poor.

### SUMMARY

Based on this, it is necessary to provide a composite negative electrode material and its preparation method and application that can improve the cycle performance of the battery.

To achieve the above purpose, this application adopts the following technical solutions:
One purpose of this application is to provide a composite negative electrode material. The composite negative electrode material includes an inner core and a coating layer located on at least part of a surface of the inner core, the inner core includes a porous carbon material and Si particles, the Si particles are distributed on a surface and/or in pores of the porous carbon material.

The composite negative electrode material is provided with micropores and mesopores, wherein a ratio of a pore volume of the micropores to a pore volume of the mesopores is (2-50):(50-98); an oil absorption value of the composite negative electrode material is less than an oil absorption value of the composite negative electrode material in which removing the Si particles, and based on the oil absorption value of the composite negative electrode material after removing the Si particles being 100%, a difference is greater than or equal to 10%.

In one embodiment, in FIB-TEM test of the composite negative electrode material, a scanning line concentration of EDS satisfies the following relationship: 0.90≤(A₁-C₁)/(C₁-B₁)≤1.10, and |((A₁-B₁)/2C₁)²-1|≤0.01; wherein A₁ is a maximum value of the concentration along the Si scanning line, B₁ is a minimum value of the concentration along the Si scanning line, and C₁ is a median value of the concentration along the Si scanning line.

In one embodiment, in FIB-TEM test of the composite negative electrode material, a scanning line concentration of EDS satisfies the following relationship: 0.90≤(A₂-C₂)/(C₂-B₂)≤1.10, and |((A₂-B₂)/2C₂)²-1|≤0.01; where A₂ is a maximum value of the concentration along the C scanning line, B₂ is a minimum value of the concentration along the C scanning line, and C₂ is a median value of the concentration along the C scanning line.

In one embodiment, in a ²⁹Si NMR spectrum of the composite negative electrode material, there is a Si-C resonance peak between -10ppm and 20ppm with an intensity of D₁, and there is a Si resonance peak between -90ppm to -110ppm with an intensity of D₂, and D₂/D₁≥10.

In one embodiment, the composite negative electrode material contains amorphous Si-C bonds.

In one embodiment, an X-ray diffraction spectrum of the composite negative electrode material contains SiC crystal peaks.

In one embodiment, a porosity of the composite negative electrode material is 10% to 20%.

In one embodiment, when the composite negative electrode material is lithiated to 50% of its theoretical lithiated capacity, a porosity of the electrode piece containing the composite negative electrode material is A1, A1≥30%.

In one embodiment, when the composite negative electrode material is lithiated to 70% of its theoretical lithiated capacity, the porosity of the electrode piece containing the composite negative electrode material is A2, 20%≤A2<30%.

In one embodiment, when the composite negative electrode material is lithiated to 80% of its theoretical lithiated capacity, the porosity of the electrode piece containing the composite negative electrode material is A3, 10%≤A3<20%.

In one embodiment, the ratio of the pore volume of the micropores to the pore volume of the mesopores is (5-23):(77-95).

In one embodiment, after complete lithium insertion, an average pore diameter of closed pores of the composite negative electrode material is 0 to10nm.

In one embodiment, a mass percentage of Si in the composite negative electrode material is 10% to 90%.

In one embodiment, a specific surface area of the composite negative electrode material is 0.5m²/g to 50m²/g.

In one embodiment, a true density of the composite negative electrode material is 1.80g/cm³ to 2.90g/cm³.

In one embodiment, an average particle size D50 of the composite negative electrode material is 1µm to 25µm.

In one embodiment, an average thickness of the coating layer is 1nm to 100nm.

In one embodiment, the coating layer includes a carbon coating layer.

In one embodiment, an average pore diameter of the porous carbon is R1, and a value range of R1 is 0.2nm to 1000nm.

In one embodiment, a volume proportion of pores of 2nm to 100nm in a pore volume of the porous carbon is greater than or equal to 50%.

In one embodiment, a ratio of a pore volume of micropores to a pore volume of mesopores in the porous carbon is (50-95): (5-50).

In one embodiment, an average distance between the pores of the porous carbon is H1, a value range of H1 is 1nm to 500nm.

In one embodiment, an average distance between the pores of the porous carbon H1 is less than or equal to an average pore diameter of the porous carbon R1.

In one embodiment, a particle size of the porous carbon is 1µm to 50µm.

In one embodiment, the Si particles in the composite negative electrode material include amorphous silicon with a particle size range of 1nm to 110nm.

In one embodiment, an average particle size of the Si particles in the composite negative electrode material is 1nm to 200nm.

In one embodiment, a particle size of Si grains of the composite negative electrode material is 2nm to 10nm, and a standard deviation σ≤0.2.

Another purpose of the present application is to provide preparation method for the above-mentioned composite negative electrode material. The preparation method includes following steps: using chemical vapor infiltration to deposit Si particles on a surface and/or in pores of porous carbon to obtain a precursor; performing the precursor by a coating treatment in a protective atmosphere to form a coating layer on a surface of the precursor to obtain a composite negative electrode material; wherein the composite negative electrode material is provided with micropores and mesopores, and a ratio of a pore volume of the micropores to a pore volume of the mesopores is (2-50):(50-98); an oil absorption value of the composite negative electrode material is less than an oil absorption value of the composite negative electrode material after removing the Si particles, and based on the oil absorption value of the composite negative electrode material after removing the Si particles being 100%, a difference is greater than or equal to 10%.

In one embodiment, the step of depositing Si particles on the surface and/or in the pores of the porous carbon by chemical vapor infiltration process includes: providing porous carbon, introducing reaction gas, treating the reaction gas by a thermal decomposition, and depositing Si particles on the surface and/or in the pores of the porous carbon.

In one embodiment, the reaction gas includes a gaseous Si source, hydrogen and an inert gas.

In one embodiment, a temperature of the thermal decomposition is 300°C to 500°C.

In one embodiment, a time of the thermal decomposition is 0.2h to 20h.

In one embodiment, a flow rate of the reaction gas is 50L/min to 200L/min.

In one embodiment, the reaction gas includes a gaseous Si source, the gaseous Si source includes at least one of monosilane, disilane, monochlorosilane, dichlorosilane, trichlorosilane and tetrachlorosilane.

In one embodiment, the reaction gas includes an inert gas, the inert gas includes at least one of nitrogen, helium, neon and argon.

In one embodiment, the reaction gas includes an inert gas, and a flow rate of the inert gas is 0.2L/min to 50L/min.

In one embodiment, a flow ratio of the gaseous Si source to the inert gas is 1:1 to 1:20.

In one embodiment, a preparation method of the porous carbon includes at least one of pyrolysis treatment of the organic carbon source and chemical activation treatment of the organic carbon source.

In one embodiment, the coating treatment includes following steps: mixing the precursor with a carbon source, and controlling a thermally crack of the carbon source in a protective atmosphere to form a carbon coating layer on the surface of the precursor.

In one embodiment, a formation method of the carbon coating layer includes at least one of gas phase carbon coating treatment, solid phase carbon coating treatment and liquid phase carbon coating treatment.

In one embodiment, the protective atmosphere includes at least one of nitrogen, argon, helium, neon, krypton and xenon.

In one embodiment, a gas flow rate of the protective atmosphere is 20mL/min to 1000mL/min.

In one embodiment, the carbon source includes a gas phase carbon source.

In one embodiment, the carbon source includes a gaseous carbon source, and the gaseous carbon source includes a gaseous hydrocarbon carbon source.

In one embodiment, the carbon source includes a gaseous carbon source, and the gaseous carbon source includes at least one of methane, acetylene, ethylene, ethane, propane, propylene, propyne, acetone and benzene.

In one embodiment, the carbon source includes a solid carbon source.

In one embodiment, the carbon source includes a solid carbon source, and the solid carbon source includes a solid organic carbon source.

In one embodiment, the carbon source includes a solid carbon source, and the solid carbon source includes at least one of citric acid, glucose, asphalt, phenolic resin and furfural resin.

In one embodiment, the carbon source includes a liquid carbon source.

In one embodiment, the carbon source includes a liquid carbon source, and the liquid carbon source includes a liquid organic carbon source.

In one embodiment, the carbon source includes a liquid carbon source, and the liquid carbon source includes at least one of n-hexane, toluene, benzene, xylene, methanol, ethanol, propanol, butanol, pentanol, acetone, butanone, 2-pentanone, methyl acetate, ethyl acetate, propyl acetate, butyl acetate and amyl acetate.

In one embodiment, a temperature of the thermal cracking is 600°C to 1200°C.

In one embodiment, a heating rate of the thermal cracking is 0.1°C/min to 50°C/min.

In one embodiment, a total pressure of a reaction system formed by the reaction gas is 100kPa to 2000kPa.

In one embodiment, a total pressure of a reaction system formed by the reaction gas is 100kPa to 2000kPa, and a partial pressure of the gaseous Si source is 1kPa to 100kPa.

In one embodiment, a total pressure of a reaction system formed by the reaction gas is 100kPa to 2000kPa, and a partial pressure of the hydrogen is 50kPa to 1000kPa.

In one embodiment, a total pressure of the reaction system formed by the reaction gas is 100kPa to 2000kPa, and a partial pressure of the inert gas is 1kPa to 1000kPa.

Another purpose of the present application is a negative electrode plate, the negative electrode plate includes the above-mentioned composite negative electrode material or the composite negative electrode material prepared by the above-mentioned preparation method.

Another purpose of the present application is to provide a battery, the battery includes the above-mentioned negative electrode plate.

Another purpose of the present application is to provide an electrical device, the electrical device includes the above-mentioned battery.

Compared with conventional technologies, the above-mentioned composite negative electrode material and its preparation method have at least the following advantages:

(1) the above-mentioned composite negative electrode material not only ensures the advantage of Si as a negative electrode with a large specific capacity, but also uses the porous characteristics of the porous carbon to provide space for the volume expansion of Si, so that the volume expansion of the material is lower; the surface of the inner core has a coating layer with a certain strength, which can cover the exposed Si particles, thereby reducing the direct contact between the Si particles and the electrolyte, further increasing the overall structural stability of the composite negative electrode material, and also ensuring that the composite negative electrode material has better cycle performance; moreover, the coating layer on the surface of the inner core is conducive to the formation of a thinner SEI film when the material contacts the electrolyte, so that consumption of electrolyte is less and the cycle retention rate is better; by reasonably controlling the ratio of the pore volume of the micropores to the pore volume of the mesopores in the composite negative electrode material, the oil absorption value of the composite negative electrode material filled with silicon particles is less than the oil absorption value of the composite negative electrode material after removing the Si particles, indicating that part of the pores in the composite negative electrode material are effectively filled, which can reduce the side reaction between the composite negative electrode material and the electrolyte, and ensure that the composite negative electrode material can both alleviate the volume expansion of Si during the charge and discharge cycle and maintain the stability of the overall material, avoiding the collapse of the material structure during the cycle, thereby improving the cycle performance.

(2) the composite negative electrode material is prepared by CVI (Chemical Vapor Infiltration) technology, Si particles contained in the composite negative electrode material are mainly in an amorphous state, which greatly reduces the collapse of the pore structure, the rapid decay of specific capacity, and the poor lithium insertion cycle performance caused by the anisotropic expansion of crystalline Si during the lithium insertion process; and Si particles can be well dispersed in the pores of the porous carbon and on the skeleton of the porous carbon, Si particles are embedded in the carbon skeleton at the atomic level, so that the coating layer on the skeleton of the porous carbon is complete and has high strength, which improves the compatibility problem between nano-Si and electrolyte and is conducive to the formation of a stable SEI film.

### BRIEF DESCRIPTION OF DRAWINGS

FIG. 1 is a schematic diagram of a structure of a composite negative electrode material according to an embodiment of the present application, wherein 1 is a coating layer, 2 is a porous carbon material, 3 is a Si particle, 4 is a mesopore, and 5 is a micropore.

FIG. 2 is a schematic diagram of a relationship between an average distance between pores of the porous carbon and an average pore diameter of the porous carbon provided by an embodiment of the present application.

FIG. 3 is a flow chart of a preparation method for a composite negative electrode material according to another embodiment of the present application.

### DETAILED DESCRIPTION OF EMBODIMENTS

In order to make the purpose, technical solutions and advantages of the present application clearer, the present application will be further described in detail below in conjunction with examples. It should be understood that the specific embodiments described here are only used to explain the application and are not used to limit the application.

Unless otherwise defined, all technical and scientific terms used herein have the same meaning as commonly understood by one of ordinary skill in the technical field to which this application belongs. The terminology used herein in the description of the application is for the purpose of describing specific embodiments only and is not intended to limit the application. As used herein, the term "and/or" includes any and all combinations of one or more of the associated listed items.

In this application, the technical features described in open format include closed technical solutions composed of the listed features, and also include open technical solutions including the listed features.

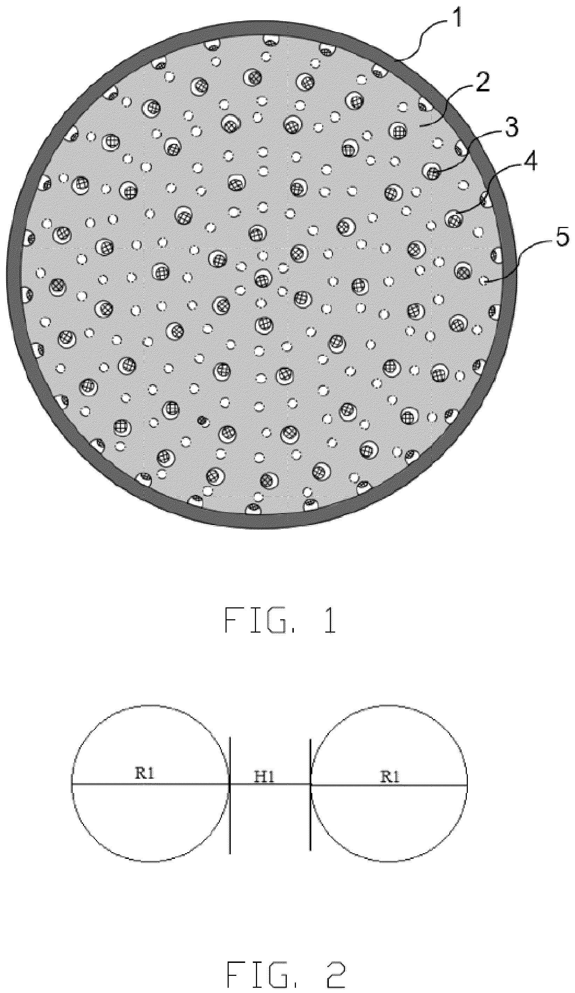

Referring to FIG. 1, an embodiment of the present application provides a composite negative electrode material, the composite negative electrode material includes an inner core and a coating layer 1 located on at least part of a surface of the inner core. The inner core includes a porous carbon material 2 and Si particles 3. The Si particles 3 are distributed on a surface and/or in pores of the porous carbon material 2.

The composite negative electrode material is provided with micropores 5 and mesopores 4, wherein a ratio of a pore volume of the micropores 5 to a pore volume of the mesopores 4 is (2-50):(50-98).

An oil absorption value of the composite negative electrode material is less than an oil absorption value of the composite negative electrode material after removing the Si particles, and based on the oil absorption value of the composite negative electrode material after removing the Si particles being 100%, a difference is greater than or equal to 10%.

In this embodiment, the negative electrode material includes the inner core and the coating layer located on the surface of the inner core. The Si particles in the inner core are located on the surface and/or in the pores of the porous carbon material. The porous carbon material serves as a skeleton to carry the Si particles. Its porous characteristics provide space for the volume expansion of Si during lithium insertion and extraction, thus reducing the volume expansion of the material. The coating layer with a certain strength is located on the surface of the inner core, which can mechanically constrain the inner core, relieve the volume expansion stress of the inner core, cover the Si particles exposed on the surface of the inner core, thereby reducing the direct contact between the Si particles and electrolyte without affecting the transmission of lithium ions, and being conducive to the formation of a thinner SEI film when the material is in contact with the electrolyte, which consumes less electrolyte, has better cycle retention rate, and can also increase the capacity of the material. And the presence of the coating layer further increases the overall structural stability of the composite negative electrode material. Moreover, before the porous carbon is composited with Si particles, its pores are mainly micropores. After the composite negative electrode material is prepared, since most of the micropores have been filled by Si particles, the remaining pores of the porous carbon are mainly unfilled mesopores distributed inside the particles and in a closed pore state. By controlling the pore volume ratio of the micropores and mesopores of the negative electrode material, the oil absorption value of the composite negative electrode material after filling the silicon particles is less than the oil absorption value of the composite negative electrode material after removing the Si particles, which indicates that some of the pores in the composite negative electrode material are effectively filled, thereby reducing the side reactions between the composite negative electrode material and the electrolyte, regulating the filling degree of Si particles, increasing the specific capacity of the material, alleviating the volume expansion of Si, maintaining the stability of the overall material and avoiding the collapse of the material structure during the cycle, so that the cycle performance, electrochemical performance, etc. of the material are improved under the synergistic effect of the above-mentioned overall structure.

Although there are methods of using porous carbon materials and Si composites to improve the cycle performance of Si-based composite negative electrode materials in traditional technologies, the prepared Si-based composite negative electrode materials cannot take into account the performances of the first discharge specific capacity, the first coulombic efficiency, the capacity retention rate after cycling and the thickness expansion rate of the electrode piece after cycling. For example, the capacity retention rate of the battery after 50 cycles of traditional Si-based composite negative electrode material is about 85%, but the first discharge specific capacity and the first coulombic efficiency are low, the thickness expansion rate of the electrode piece after cycling is high and the structure is easy to collapse during cycling. Therefore, the comprehensive performance of Si-based composite negative electrode materials still needs to be improved. In this regard, the applicant has made creative improvements and experiments, and verified that the above problems can be solved by regulating the ratio of the pore volume of the micropores and the pore volume of the mesopores in the composite negative electrode material.

In this embodiment, by controlling the ratio of the pore volume of the micropores to the pore volume of the mesopores in the composite negative electrode material to (2-50):(50-98), it is achieved that the thickness expansion rate of the electrode piece after cycling can be reduced while improving the first discharge specific capacity, the first coulombic efficiency and the capacity retention rate after cycling of the battery. And because when the proportion of the micropores in the composite negative electrode material is too large, there are not enough pores in the composite negative electrode material to withstand the volume expansion during the charge and discharge process, and in practice, due to factors such as diffusion limitation, the pores of porous carbon cannot be 100% filled with Si. When the pore volume ratio of the mesopores in the composite negative electrode material is too large, on the one hand, the specific capacity is low due to too little filling of Si, and on the other hand, there are still a large number of pores, the overall structure has poor stability and is prone to collapse during circulation. It should be noted that since the pores on the surface of the porous carbon material are filled with silicon to form micropores, most of the mesopores are located inside the porous carbon material or are in a closed pore state, and they are difficult to be effectively filled. Therefore, in the actual filling process, mainly the micropores are filled, so the proportion of the mesopores in the composite negative electrode material after deposition will be relatively high.

In a specific embodiment, the ratio of the pore volume of the micropores to the pore volume of the mesopores in the composite negative electrode material may be, for example, 2:98, 5:95, 10:90, 20:80, 24:76, 28:72 , 30:70, 38:62, 40:60, 45:55 or 50:50, etc., and of course it may also be other values within the above range, which is not limited here. Preferably, the ratio of the pore volume of the micropores to the pore volume of the mesopores in the composite negative electrode material is (5-23):(77-95).

In a specific embodiment, the oil absorption value of the composite negative electrode material is less than the oil absorption value of the composite negative electrode material after removing the Si particles, and the difference is greater than or equal to 10%.

It can be understood that the Si particles distributed on the surface and/or in the pores of the porous carbon material lead to a reduction in the pores of the porous carbon in the composite negative electrode material, so the oil absorption value of the composite negative electrode material decreases. The oil absorption value of the composite negative electrode material is less than the oil absorption value of the composite negative electrode material after removing the Si particles, and the difference may be, for example, 10%, 12%, 14%, 16%, 18%, 20%, 22%, 24%, 26%, 28%, 30% or 40%, etc. (based on the oil absorption value of the composite negative electrode material after removing the Si particles being 100%). Of course, the difference between the oil absorption value of the composite negative electrode material and the oil absorption value of the composite negative electrode material after removing the Si particles cannot reach 100%, and it cannot be too high, this is because a certain amount of pores needs to be reserved in the porous carbon material to buffer the volume expansion of Si when is lithiated. When the difference is less than 10%, it means that there are too many pores in the composite negative electrode material, resulting in poor strength and structural stability of the composite negative electrode material. The material structure is prone to collapse during the cycle, which reduces the cycle performance of the material.

In a specific embodiment, in the FIB-TEM (Focused Ion Beam-Transmission Electron Microscope) test of the composite negative electrode material, the scanning line concentration of EDS (Energy Dispersive Spectroscopy) satisfies the following relationship: 0.90≤(A₁-C₁)/(C₁-B₁)≤1.10, and |((A₁-B₁)/2C₁)²-1|≤0.01; wherein A₁ is a maximum value of the concentration along the Si scanning line, B₁ is a minimum value of the concentration along the Si scanning line, and C₁ is a median value of the concentration along the Si scanning line. It can be understood that (A₁-C₁)/(C₁-B₁) may be any value between 0.90 and 1.10, for example, it may be 0.90, 0.91, 0.92, 0.93, 0.94, 0.95, 0.96, 0.97, 0.98, 0.99, 1.00, 1.01, 1.02, 1.03, 1.05, 1.07, 1.08 or 1.10, etc. |((A₁-B₁)/2C₁)²-1| may be 0.0065, 0.0070, 0.0079, 0.008, 0.0088, 0.0089, 0.009, 0.0093, 0.0098 or 0.01, etc.

In a specific embodiment, in the FIB-TEM test of the composite negative electrode material, the scanning line concentration of EDS satisfies the following relationship: 0.90≤(A₂-C₂)/(C₂-B₂)≤1.10, and |((A₂-B₂)/2C₂)²-1|≤0.01; where A₂ is a maximum value of the concentration along the C scanning line, B₂ is a minimum value of the concentration along the C scanning line, and C₂ is a median value of the concentration along the C scanning line. It can be understood that (A₂-C₂)/(C₂-B₂) may be any value between 0.90 and 1.10, for example, it may be 0.90, 0.91, 0.92, 0.93, 0.94, 0.95, 0.96, 0.97, 0.98, 0.99, 1.00, 1.01, 1.02, 1.03, 1.05, 1.08 or 1.10, etc. |((A₂-B₂)/2C₂)²-1| may be 0.0065, 0.0067, 0.0070, 0.0074, 0.0079, 0.008, 0.0088, 0.0089, 0.009, 0.0093, 0.0098 or 0.01, etc.

It should be noted that FIB-TEM tests the distribution of C element and Si element in a cross section of the composite negative electrode material particles. Since the composite negative electrode material contains Si element and C element, the EDS scanning lines are at least two, namely the Si scanning line and the C scanning line. When the Si scanning line concentration and the C scanning line concentration of the EDS satisfy the above relationship, the nano-silicon is dispersed and distributed on the porous carbon material, and the porous carbon material can effectively provide expansion space for the Si particles distributed around it, thereby ensuring the structural stability of the composite negative electrode material during the charge and discharge process.

In a specific embodiment, in a ²⁹Si NMR spectrum of the composite negative electrode material, there is a Si-C resonance peak between -10ppm and 20ppm with an intensity of D₁, and there is a Si resonance peak between -90ppm to -110ppm with an intensity of D₂, and D₂/D₁≥10.

It should be noted that there is a trace amount of SiC in the composite negative electrode material of this embodiment. Since SiC is an inactive substance, when the content of SiC increases, the specific capacity will decrease, when D₂/D₁≥10, it means that there is a certain binding force between Si and C in the composite negative electrode material, and an atomic-level binding force is formed between Si and C, and at the same time, there is only a trace amount of crystalline SiC, so that the composite negative electrode material of the present application can maintain structural stability during the charge and discharge process and show excellent cycle performance. It can be understood that D₂/D₁ may be 10, 11, 12, 13, 14, 15, 16, 17, 18, 19, 20, 25, 30, 35, 40 or 50, etc., which is not limited here. The larger the value of D₂/D₁, the less the content of inactive SiC.

In a specific embodiment, the composite negative electrode material contains amorphous Si-C bonds, which are formed by the combination of Si atoms and C atoms.

It should be noted that the SiC in the composite negative electrode material of this embodiment is basically in an amorphous state.

In a specific embodiment, the X-ray diffraction spectrum of the composite negative electrode material contains a trace amount of SiC crystallization peaks.

It should be noted that when a content of the crystalline SiC is relatively high, the specific capacity of the composite negative electrode material will be reduced, therefore, the SiC in the composite negative electrode material of this embodiment is basically in an amorphous state, and only a trace amount of SiC is in a crystalline state.

In a specific embodiment, a porosity of the composite negative electrode material is 10% to 20%. It can be understood that when the porosity is less than 10%, the composite negative electrode material does not have enough pores to withstand the volume expansion during the charge and discharge process, and due to factors such as diffusion limitation, it is impossible to achieve 100% pore filling when Si particles are deposited on the surface and/or in the pores of the porous carbon. When the porosity is greater than 20%, on the one hand, the specific capacity is low due to too little filling of Si, on the other hand, due to the large number of pores in the composite negative electrode material, its overall stability is poor and it is easy to collapse during cycling. Optionally, the porosity of the composite negative electrode material may be 10%, 11%, 12%, 13%, 14%, 15%, 16%, 17%, 18%, 19% or 20%. The porosity of the composite negative electrode material may also be other values between 10% and 20%.

In a specific embodiment, when the composite negative electrode material is lithiated to 50% of its theoretical lithiation capacity, a porosity of the electrode piece containing the composite negative electrode material is A1, A1≥30%; further, when the composite negative electrode material is lithiated to 70% of its theoretical lithiation capacity, the porosity of the electrode piece containing the composite negative electrode material is A2, 20%≤A2<30%; further, when the composite negative electrode material is lithiated to 80% of its theoretical lithiation capacity, the porosity of the electrode piece containing the composite negative electrode material is A3, 10%≤A3<20%. It should be noted that "electrode piece" refers to an electrode piece made of a composite negative electrode material as an active material and one or more of the conductive agents, binders and solvents commonly used in the technical field, such as the electrode piece prepared in the embodiments of the present application. When the electrode piece cannot meet the above-mentioned porosity conditions, it means that the composite negative electrode material does not have enough pore space to buffer the volume expansion of Si during lithiation. In this way, when is lithiated, the expansion of Si brings great expansion stress to the porous carbon around it, resulting in structural instability of the composite negative electrode material and degradation of the electrochemical performance. In addition, conventional electrode pieces also add graphite materials, when the porosity is not within the above range, Si will squeeze the structure layer of the surrounding graphite sheet during the volume expansion process, resulting in the instability of the entire electrode piece.

In a specific embodiment, an average pore diameter of the closed pores of the composite negative electrode material after complete lithium insertion is 0 to10nm. It should be explained that "complete lithium insertion" means that the composite negative electrode material is fully embedded with lithium ions and reaches a saturated state. If the pore diameter of the closed pores in the porous carbon after complete lithium insertion is greater than 10nm, the mechanical strength of the composite negative electrode material is insufficient due to the large pores in this local area, and stress weak points are prone to occur. During the charging and discharging process, the structure may be broken and a large amount of electrolyte may penetrate, which is not conducive to the electrochemical performance of the composite negative electrode material. Optionally, the pore diameter of the closed pores in the porous carbon after complete lithium insertion may be 1nm, 1.5nm, 2nm, 2.5nm, 3nm, 3.5nm, 4nm, 4.5nm, 5nm, 5.5nm, 6nm, 6.5nm, 7nm, 7.5nm, 8nm, 8.5nm, 9nm, 9.5nm or 10nm, and may also be other values between 0 to10nm.

In a specific embodiment, a mass percentage of Si in the composite negative electrode material is 10% to 90%, preferably 20% to 80%. It can be understood that the mass percentage of Si in the composite negative electrode material may be 10%, 12%, 14%, 16%, 18%, 20%, 25%, 30%, 35%, 40%, 50%, 60%, 70%, 80% or 90%. The mass percentage of Si in the composite negative electrode material may also be other values between 10% to 90%.

In a specific embodiment, a specific surface area of the composite negative electrode material is 0.5m²/g to 50m²/g. It can be understood that the specific surface area of the composite negative electrode material may be 0.5m²/g, 1.0m²/g, 5.0m²/g, 10m²/g, 13m²/g, 16m²/g, 20m²/g, 23m²/g, 26m²/g, 30m²/g, 33m²/g, 36m²/g, 40m²/g, 43m²/g, 46m²/g or 50m²/g. The specific surface area of the composite negative electrode material may also be other values between 0.5m²/g and 50m²/g.

In a specific embodiment, a true density of the composite negative electrode material is 1.80g/cm³ to 2.90g/cm³. It can be understood that the true density of the composite negative electrode material may be 1.80g/cm³, 1.90g/cm ³, 2.00g/cm³, 2.10g/cm³, 2.20g/cm³, 2.30g/cm³, 2.40g /cm³, 2.50g/cm³, 2.60g/cm³, 2.70g/cm³, 2.80g/cm³ or 2.90g/cm³. The density of the composite negative electrode material may also be other values between 1.80g/cm³ to 2.90g/cm³.

In a specific embodiment, an average particle size D50 of the composite negative electrode material is 1µm to 25µm, preferably 2µm to 15µm, and more preferably 3µm to 10µm. It should be explained that when the average particle size of the composite negative electrode material is greater than or equal to 1µm, a tap density of the electrode can be reduced, thereby affecting its processing performance as a negative electrode of a lithium-ion battery, avoiding the problem of too low compaction density and low energy density of the electrode piece, and a suitable volume specific capacity can be obtained. In addition, when the average particle size of the composite negative electrode material is less than or equal to 25µm, a slurry forming the electrode can be appropriately coated to a uniform thickness. Optionally, the average particle size D50 of the composite negative electrode material may be 1µm, 2µm, 3µm, 4µm, 5µm, 6µm, 7µm, 8µm, 9µm, 10µm, 12µm, 14µm, 15µm, 17µm, 19µm, 21µm, 23µm or 25µm. The average particle size D50 of the composite negative electrode material may also be other values between 1µm to 25µm.

In a specific embodiment, an average thickness of the coating layer is 1nm to 100nm. It can be understood that the average thickness of the coating layer may be 1 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95nm or 100nm. The average thickness of the coating layer may also be other values between 1nm to 100nm.

In a specific embodiment, the coating layer includes a carbon coating layer. It can be understood that the carbon coating layer as a shell can mechanically constrain the inner core, the carbon coating layer allows lithium ions to pass through, but prevents the electrolyte from interacting with the internal active material, and the C in the carbon coating layer can combine with the amorphous Si in the porous carbon to form an amorphous Si-C bond, thereby increasing the interface bonding force.

In a specific embodiment, an average pore diameter of the porous carbon is R1, and the value range of R1 is 0.2nm to1000nm, preferably 2nm to 500nm. It can be understood that the pores of the porous carbon can be open-pore structures or closed-pore structures. The pores inside the porous carbon, including closed pores, help to accommodate the increased volume when is lithiated without destroying the structure of the porous carbon or significantly increasing the overall size of the composite negative electrode material, which can further enhance the stability of the silicon-carbon interface. The closed pores of the porous carbon, on the one hand, reserve buffer space for the volume expansion of Si when is lithiated, and on the other hand, because there is no opening connected to the outside world, it is difficult for the electrolyte to penetrate, so there is no problem of continuous thickening of the SEI layer. The average pore diameter of the porous carbon may be 0.2nm, 2nm, 4nm, 6nm, 8nm, 10nm, 15nm, 20nm, 30nm, 40nm, 50nm, 100nm, 150nm, 200nm, 250nm, 300nm, 350nm, 400nm, 450nm, 500nm, 550nm, 600nm, 650nm, 700nm, 750nm, 800nm, 850nm, 900nm, 950nm or 1000nm. The average pore diameter of the porous carbon may also be other values between 0.2nm to 1000nm.

In a specific embodiment, a volume proportion of pores of 2nm to 100nm in a pore volume of the porous carbon is greater than or equal to 50%. It can be understood that the volume proportion of pores of 2nm to 100nm in the pore volume of the porous carbon may be 50%, 52%, 55%, 8%, 60%, 62%, 65%, 68%, 70%, 72% or 75%, etc.

In a specific embodiment, a ratio of a pore volume of micropores to a pore volume of mesopores in the porous carbon is (50-95): (5-50).

It should be explained that if the pores of porous carbon is greater than 100nm, although Si atoms can penetrate into the pores, it is impossible to achieve uniform mixing of Si and C in the porous carbon at the nanometer level. At this time, a segregation of Si and C will lead to the degradation of electrochemical performance. When the porous carbon is in good contact with the gaseous silicon source, the gaseous silicon source can effectively penetrate into an interior of the porous carbon material, so that the micropores in the porous carbon are effectively filled, and the remaining pores in the composite negative electrode material are mainly mesopores distributed inside the particles and in a closed-pore state; if the gaseous silicon source decomposes and forms a crust on the surfaces of the porous carbon particles, a large number of micropores inside the porous carbon cannot be effectively filled, resulting in the remaining pores in the composite negative electrode material being mainly micropores. Optionally, the ratio of the pore volume of the micropores to the pore volume of the mesopores in the porous carbon may be, for example, 95:5, 90:10 or 80:20, or 70:30, or 60:40, or 50:50, etc.

In a specific embodiment, an average distance between the pores of the porous carbon is H1, and the value range of H1 is 1nm to 500nm, preferably 1nm to 100nm. It should be noted that the average distance between the pores of the porous carbon refers to an average value of a shortest distance between the edges of adjacent pores of the porous carbon. It can be understood that the average distance between the pores of the porous carbon may be 1nm, 5nm, 10nm, 15nm, 20nm, 25nm, 30nm, 40nm, 60nm, 100nm, 150nm, 200nm, 250nm, 300nm, 350nm, 400nm, 450nm or 500nm, or other values between 1nm to 500nm.

In a specific embodiment, referring to FIG. 2, which provides a schematic diagram of a relationship between the average distance H1 between the pores of the porous carbon and the average pore diameter R1 of the porous carbon. The average distance H1 between the pores of the porous carbon is less than or equal to the average pore diameter R1 of the porous carbon, wherein H1 is a distance from an outer edge of one pore to an outer edge of an adjacent pore. It should be noted that when the average distance H1 between the pores of the porous carbon is less than or equal to the average pore diameter R1 of the porous carbon, it indicates the distribution of the pores in the porous carbon, that is, the pores in the porous carbon are relatively developed.

In a specific embodiment, a particle size of the porous carbon is 1µm to 50µm, preferably 2µm to 20µm. It can be understood that the particle size of the porous carbon may be 1µm, 2µm, 3µm, 4µm, 5µm, 8µm, 10µm, 12µm, 15µm, 17µm, 20µm, 25µm, 30µm, 35µm, 40µm, 45µm or 50µm. The particle size of the porous carbon may also be other values between 1µm to 50µm.

In a specific embodiment, the Si particles in the composite negative electrode material include amorphous silicon with a particle size range of 1nm to 110nm. It should be noted that the Si in the inner core of the composite negative electrode material is mainly amorphous, and the amorphous Si is used as a negative electrode to accept lithium ions migrated from the positive electrode to achieve energy storage. When the Si in the inner core of the composite negative electrode material is amorphous, it can combine with the C in the coating layer to form an amorphous Si-C bond, which can increase the interface bonding force. It can be understood that the particle size of the Si particles may be 1nm, 3nm, 5nm, 8nm, 10nm, 12nm, 15nm, 20nm, 25nm, 30nm, 35nm, 40nm, 45nm, 50nm, 55nm, 60nm, 65nm, 70nm, 75nm, 80nm, 85nm, 90nm, 95nm, 100nm, 105nm or 110nm. The particle size of Si particles may also be other values between 1nm to 110nm.

In a specific embodiment, an average particle size of the Si particles in the composite negative electrode material is 1nm to 200nm, preferably 2nm to 100nm, and more preferably 5nm to 50nm. It should be explained that when the average particle size of the Si particles is greater than or equal to 1nm, it is possible to prevent Si particles from passing through the pores of the inner core and escaping therefrom. In addition, when the average particle size of the Si particles is less than or equal to 200nm, the pores and smaller Si particles contained in the inner core can appropriately inhibit the pulverization caused by the volume expansion of Si during the charge and discharge process, thereby improving the cycle performance of the material. A distribution morphology of Si particles in the porous carbon is determined by the CVI process, which mainly depends on the flow rate, partial pressure and proportion of Si source gas, hydrogen and inert gas. Alternatively, the average particle size of the Si particles in the composite negative electrode material may be 1nm, 2nm, 3nm, 4nm, 5nm, 10nm, 20nm, 30nm, 40nm, 50nm, 60nm, 70nm, 80nm, 90nm, 100nm, 110nm, 120nm, 130nm, 140nm, 150nm, 160nm, 170nm, 180nm, 190nm or 200nm. The average particle size of the Si particles in the composite negative electrode material may also be other values between 1nm to 200nm.

In a specific embodiment, a particle size of Si grains of the composite negative electrode material is 2nm to 10nm, and the standard deviation σ≤0.2. It can be understood that the particle size of the Si grains of the composite negative electrode material may be 2nm, 2.5nm, 3nm, 3.5nm, 4nm, 4.5nm, 5nm, 5.5nm, 6nm, 6.5nm, 7nm, 7.5nm, 8nm, 8.5nm, 9nm, 9.5nm or 10nm. The particle size of the Si grains of the composite negative electrode material may also be other values between 2nm to 10nm.

Traditional Si/C composite negative electrode materials may be synthesized by heating Si-based materials, vaporizing them, and then mixing and precipitating them. However, this method includes a high-temperature process of more than 1600°C, which not only increases the process cost, but also mostly produces crystalline Si. The expansion and contraction of the crystalline Si during the charge and discharge process is greatly related to its grain orientation, so it is easy to have expansion anisotropy during the cycle process, which is not conducive to maintaining structural integrity.

Traditional Si/C composite negative electrode materials may also be prepared by calcining hydrogen silsesquioxane (abbreviated as HSQ) and a carbon precursor. The HSQ used in this preparation method is expensive, and the method is limited by the fact that the initial precursor of HSQ can only synthesize silicon oxides with uncontrollable silicon-oxygen ratio, and pure Si materials cannot be obtained. The specific capacity and the first coulombic efficiency of SiOₓ materials are much lower than those of pure Si materials.

Traditional technology also includes spraying pyrolysis of a precursor solution containing Si-based material source, carbon source and catalyst material, and then removing the by-products to form pores to prepare porous Si/C composite negative electrode materials. Although it combines the advantages of porous structure and Si-based materials, the catalyst used is an alkaline solution. Even if water, acid or alkaline solution can be used to remove the catalyst later, it is still impossible to completely remove it. On the one hand, it will cause serious environmental pollution, on the other hand, the residual alkaline solution will lead to a high pH value, and there is a risk of gas production during the subsequent preparation of slurry and the cyclic charge and discharge process.

Traditional technology also includes mixing activated carbon powder with nano-Si slurry and coal tar soft pitch, coking and low-temperature carbonization treatment, and crushing and grading to prepare Si/C composite negative electrode materials. This method cannot control the type and size of pores between carbon materials and nano-Si particles after Si particles are filled, and cannot form Si-C bonds at the interface, resulting in insufficient connection strength between Si and C.

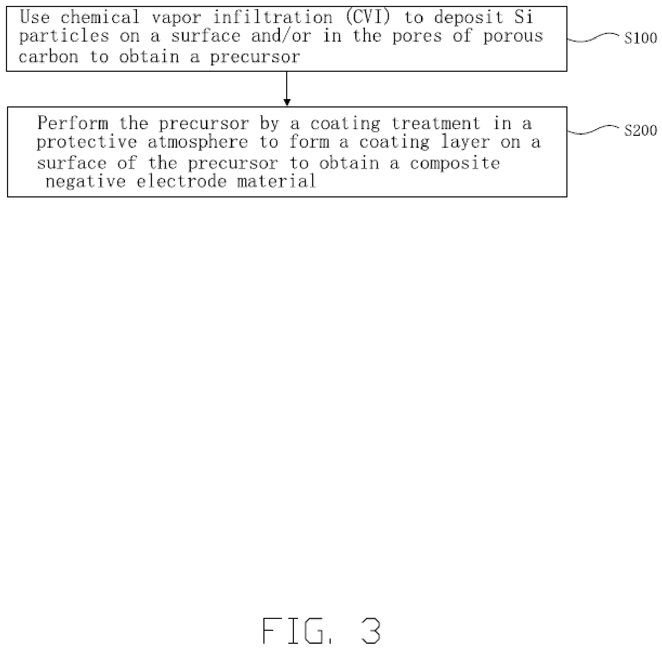

In view of the above problems, please referring to FIG. 3, an embodiment of the present application provides a preparation method for a composite negative electrode material, including the following steps:

Step S100, using chemical vapor infiltration (CVI) to deposit Si particles on a surface and/or in the pores of porous carbon to obtain a precursor.

Step S200: performing the precursor by a coating treatment in a protective atmosphere to form a coating layer on a surface of the precursor to obtain a composite negative electrode material.

Wherein, the composite negative electrode material is provided with micropores and mesopores, and a ratio of a pore volume of the micropores to a pore volume of the mesopores is (2-50):(50-98).

An oil absorption value of the composite negative electrode material is less than an oil absorption value of the composite negative electrode material after removing the Si particles, and based on the oil absorption value of the composite negative electrode material after removing the Si particles being 100%, a difference is greater than or equal to 10%. The Si particles prepared by CVI technology in this embodiment are mainly in an amorphous state, which effectively avoids the problem that the crystalline Si expands anisotropically during the lithium insertion process, resulting in the collapse of the structure of the pore, rapid specific capacity decay, and poor lithium insertion cycle performance. Moreover, Si atoms are embedded in the carbon skeleton at the atomic level, which further allows the coating layer covering on the porous carbon material skeleton complete and strong, improves the compatibility of nano-Si and electrolyte, and is conducive to the formation of a stable SEI film. During the lithium insertion process, the amorphous Si of this embodiment expands isotropically, which is conducive to alleviating the volume change, thereby solving the problem of amorphous Si particles pulverizing and falling off from the electrode. The ratio of the pore volume of the micropores to the pore volume of the mesopores in this embodiment is controlled to be (2-50):(50-98), for example, it may be 2:98, 5:95, 10:90, 20:80, 24:76, 28:72, 30:70, 34:66, 38:62, 40:60, 45:55 or 50:50, etc., this is because if the pore volume of the micropores accounts for a large proportion, there are not enough pores in the composite negative electrode material to withstand the volume expansion during the charge and discharge process; if the pore volume of the mesopores accounts for a large proportion, on the one hand, the specific capacity is low due to too little filling of Si, and on the other hand, due to the presence of a large number of pores, the overall stability of the structure of the composite negative electrode material is poor, and it is easy to collapse during the cycle.

Step S100, using chemical vapor infiltration (CVI) to deposit Si particles on the surface and/or in the pores of porous carbon to obtain the precursor.

In a specific embodiment, the step of depositing Si particles on the surface and/or in the pores of the porous carbon by chemical vapor infiltration process includes: providing porous carbon, introducing reaction gas, treating the reaction gas by a thermal decomposition, and depositing Si particles on the surface and/or in the pores of the porous carbon.

Optionally, the chemical vapor infiltration process (CVI) is performed using a CVI heating furnace, the CVI heating furnace includes a gas preheating zone and a reactor, the gas preheating zone is used to preheat the reaction gas, and the precursor is prepared in the reactor.

Specifically, a temperature of the thermal decomposition is 300°C to 500°C. Optionally, the temperature of the thermal decomposition may be 300°C, 310°C, 320°C, 330°C, 340°C, 350°C, 360°C, 390°C, 400°C, 430°C, 460°C, 490°C or 500°C. The temperature of the thermal decomposition may also be other values between 300°C to 500°C.

Specifically, a time of the thermal decomposition is 0.2h to 20h. Optionally, the time of the thermal decomposition may be 0.2h, 1h, 2h, 3h, 4h, 5h, 6h, 7h, 8h, 9h, 10h, 11h, 12h, 13h, 14h, 15h, 16h, 17h, 18h, 19h or 20h. The time of the thermal decomposition may also be other values between 0.2h to 20h.

Specifically, a flow rate of the reaction gas is 50L/min to 200L/min. Optionally, the flow rate of the reaction gas may be 50L/min, 60L/min, 70L/min, 80L/min, 90L/min, 100L/min, 110L/min, 120L/min, 130L/min, 140L/min, 150L/min, 160L/min, 170L/min, 180L/min, 190L/min or 200L/min. The flow rate of the reaction gas may also be other values between 50L/min to 200L/min.

In a specific embodiment, a preparation method of porous carbon includes pyrolysis treatment of organic carbon sources and activation treatment of organic carbon sources. Wherein, activation treatment may be at least one of physical activation treatment and/or chemical activation treatment.

It should be explained that chemical activation treatment is to activate and pore the carbon material using an activated pore-forming agent. In the above-mentioned activation pore-forming process, micropores are mainly generated, but excessive activation will cause the wall of the micropore to collapse and then form mesopores and macropores in the carbon material. Therefore, the mesopores are mostly distributed inside the carbon material particles and the probability that the mesopores are closed pores is relatively high.

In a specific embodiment, the reaction gas includes a gaseous Si source, hydrogen and inert gas.

In a specific embodiment, a total pressure of a reaction system formed by the reaction gas is 100kPa to 2000kPa.

Specifically, the total pressure of the reaction system may be 100kPa, 120kPa, 150kPa, 180kPa, 200kPa, 300kPa, 400kPa, 500kPa, 600kPa, 700kPa, 800kPa, 1000kPa, 1200kPa, 1400kPa, 1600kPa, 1800kPa or 2000kPa, etc. The total pressure of the reaction system may also be other values between 100kPa to 2000kPa.

Specifically, a partial pressure of the gaseous Si source is 1kPa to100kPa. For example, the partial pressure of the gaseous Si source may be 1kPa, 2kPa, 5kPa, 7kPa, 10kPa, 15kPa, 20kPa, 30kPa, 40kPa, 50kPa, 60kPa, 70kPa, 80kPa, 90kPa or 100kPa, etc., and a partial pressure of the gaseous Si source may also be other values between 1kPa to 100kPa.

Specifically, a partial pressure of hydrogen is 50kPa to 1000kPa. For example, the partial pressure of hydrogen may be 50kPa, 55kPa, 60kPa, 65kPa, 70kPa, 80kPa, 90kPa, 100kPa, 200kPa, 300kPa, 400kPa, 500kPa, 700kPa, 800kPa, 900kPa or 1000kPa, etc., and the partial pressure of hydrogen may also be other values between 50kPa to 1000kPa.

Specifically, a partial pressure of the inert gas is 1kPa to 1000kPa. For example, the partial pressure of the inert gas may be 1kPa, 2kPa, 5kPa, 10kPa, 20kPa, 25kPa, 30kPa, 50kPa, 100kPa, 200kPa, 300kPa, 400kPa, 500kPa, 600kPa, 700kPa, 800kPa, 900kPa or 1000kPa, etc., and the partial pressure of the inert gas may also be other values between 1kPa to 1000kPa.

More specifically, for example, when the total pressure of the reaction system is 100kPa, the partial pressure of the gaseous Si source may be 1kPa, the partial pressure of hydrogen may be 50kPa, and the partial pressure of the inert gas may be 49kPa; or when the total pressure of the reaction system is 500kPa, the partial pressure of the gaseous Si source may be 50kPa, the partial pressure of hydrogen may be 250kPa, and the partial pressure of the inert gas may be 200kPa; or when the total pressure of the reaction system is 1500kPa, the partial pressure of the gaseous Si source may be 100kPa, the partial pressure of hydrogen may be 1000kPa, and the partial pressure of the inert gas may be 400kPa; or when the total pressure of the reaction system is 2000kPa, the partial pressure of the gaseous Si source may be 100kPa, the partial pressure of hydrogen may be 900kPa, and the partial pressure of the inert gas may be 1000kPa, etc.

In a specific embodiment, a raw material of the gaseous Si source includes at least one of monosilane, disilane, monochlorosilane, dichlorosilane, trichlorosilane and tetrachlorosilane. It should be noted that when the raw material of the gaseous Si source is monosilane, disilane, monochlorosilane or dichlorosilane, it is gaseous at room temperature; when the raw material of the gaseous Si source is trichlorosilane or tetrachlorosilane, it is liquid at room temperature, and during the thermal decomposition, the liquid Si source will be vaporized into a gaseous Si source.

In a specific embodiment, the inert gas includes at least one of nitrogen, helium, neon and argon. Specifically, a flow rate of the inert gas is 0.2L/min to 50L/min. For example, the flow rate of the inert gas is 0.2L/min, 2L/min, 5L/min, 10L/min, 15L/min, 20L/min, 25L/min, 30L/min, 35L/min, 40L/min, 45L/min or 50L/min. It can be understood that the flow rate of the inert gas may also be other values between 0.2L/min to 50L/min.

Specifically, a flow ratio of the gaseous Si source to the inert gas is 1:1 to 1:20. For example, the flow ratio of the gaseous Si source to the inert gas is 1:1, or 1:3, or 1:6, or 1:9, or 1:12, or 1:15, or 1:18, or 1:20. It can be understood that the flow ratio of the gaseous Si source to the inert gas may also be other values between 1:1 to 1:20. It should be explained that when the flow ratio of the gaseous Si source to the inert gas is less than or equal to 1:1, the prepared composite negative electrode material may produce enough Si to be evenly distributed in the porous carbon. In addition, when the flow ratio of the gaseous Si source to the inert gas is greater than or equal to 1:20, the gaseous Si source may be smoothly dispersed in the reaction gas of the CVI, and the deposition rate will not be too slow.

Step S200: performing the precursor by the coating treatment in the protective atmosphere to form the coating layer on the surface of the precursor to obtain the composite negative electrode material.

Wherein, the composite negative electrode material is provided with micropores and mesopores, and the ratio of the pore volume of the micropores to the pore volume of the mesopores is (2-50):(50-98).

The oil absorption value of the composite negative electrode material is less than the oil absorption value of the composite negative electrode material after removing the Si particles, and based on the oil absorption value of the composite negative electrode material after removing the Si particles being 100%, the difference is greater than or equal to 10%.

In a specific embodiment, the coating treatment includes the following steps: mixing the precursor with a carbon source, and controlling a thermally crack of the carbon source in a protective atmosphere to form a carbon coating layer on the surface of the precursor.

Specifically, a temperature of the thermal cracking is 600°C to 1200°C. Optionally, the temperature of the thermal cracking is 600°C, 650°C, 700°C, 750°C, 800°C, 850°C, 900°C, 950°C, 1000°C, 1050°C, 1100°C, 1150°C or 1200°C. The temperature of thermal cracking may also be other values between 600°C to 1200°C.

Specifically, a heating rate of the thermal cracking is 0.1°C/min to 50°C/min. Optionally, the heating rate of thermal cracking is 0.1°C/min, 1°C/min, 2°C/min, 3°C/min, 4°C/min, 5°C/min, 6°C/min, 7°C/min, 8°C/min, 9°C/min, 10°C/min, 15°C/min, 20°C/min, 25°C/min, 30°C/min, 35°C/min, 40°C/min, 45°C/min or 50°C/min. The heating rate of thermal cracking may also be other values between 0.1°C/min to 50°C/min.

Specifically, the protective atmosphere includes at least one of nitrogen, argon, helium, neon, krypton and xenon.

Specifically, a gas flow rate of the protective atmosphere is 20mL/min to 1000mL/min. For example, the gas flow rate of the protective atmosphere may be 20mL/min, 50mL/min, 100mL/min, 150mL/min, 200mL/min, 250mL/min, 300mL/min, 350mL/min, 400mL/min, 450mL/min, 500mL/min, 550mL/min, 600mL/min, 650mL/min, 700mL/min, 750mL/min, 800mL/min, 850mL/min, 900mL/min, 950mL/min or 1000mL/min. The gas flow rate of the protective atmosphere may also be other values between 20mL/min to 1000mL/min.

Further, a formation method of the carbon coating layer includes at least one of gas phase carbon coating treatment, solid phase carbon coating treatment and liquid phase carbon coating treatment.

In a specific embodiment, the carbon source includes a gaseous carbon source. Further, the carbon source includes a gaseous hydrocarbon carbon source. Further, the carbon source includes at least one of methane, acetylene, ethylene, ethane, propane, propylene, propyne, acetone and benzene. When the coating treatment is performed, the gaseous carbon source is introduced under a protective atmosphere to mix the gaseous carbon source with a solid composite. When the carbon source is thermally cracked, amorphous carbon is deposited on the surface of the precursor for carbon coating. Optionally, when the carbon source includes a gaseous carbon source, the coating treatment is performed in a rotary kiln or a box kiln.

In another specific embodiment, the carbon source includes a solid carbon source. Further, the carbon source includes a solid organic carbon source. Further, the carbon source includes at least one of citric acid, glucose, asphalt, phenolic resin and furfural resin. Optionally, when the carbon source includes a solid carbon source, the coating treatment is performed in a rotary kiln, a box kiln, a roller kiln, a tunnel kiln or a push plate kiln. When the carbon source includes a solid carbon source, a mixing method of the precursor and the carbon source may be VC mixing, fusion, ball milling, filtration, heating reflux, three-dimensional mixing or fluidized bed mixing.

In another specific embodiment, the carbon source includes a liquid carbon source. Further, the carbon source includes a liquid organic carbon source. Further, the carbon source includes at least one of n-hexane, toluene, benzene, xylene, methanol, ethanol, propanol, butanol, amyl alcohol, acetone, butanone, 2-pentanone, methyl acetate, ethyl acetate, propyl acetate, butyl acetate and amyl acetate. Optionally, when a liquid carbon source is used, a flow rate of the liquid carbon source is 1mL/min to 200mL/min. For example, the flow rate of the liquid carbon source is 1mL/min, 10mL/min, 20mL/min, 30mL/min, 40mL/min, 50mL/min, 60mL/min, 70mL/min, 80mL/min, 90mL/min, 100mL/min, 150mL/min or 200mL/min. In addition, the flow rate of the liquid carbon source may also be other values between 1mL/min to 200mL/min. Optionally, when the carbon source includes a liquid carbon source, the coating treatment is performed in a rotary kiln, a box furnace, a roller kiln, a tunnel kiln or a push plate kiln. When the carbon source includes a liquid carbon source, the precursor and the carbon source can be mixed by VC mixing, fusion, ball milling, filtration, heating reflux, three-dimensional mixing or fluidized bed mixing.

Another embodiment of the present application further provides a negative electrode plate, which includes the above-mentioned composite negative electrode material.

Another embodiment of the present application further provides a battery, which includes the above-mentioned negative electrode plate.

Another embodiment of the present application further provides an electrical device, which includes the above-mentioned battery.

As the parameter determination in this application, the following equipment and methods are optionally used for determination:
(1) True density test: apply the Archimedean principle of gas displacement (density = mass/volume) and use the Bohr law (PV = nRT) of inert gas with small molecular diameter under certain conditions to accurately measure the true volume of the material being tested, thereby obtaining its true density. The instrument used is Anton Paconta 5200e true density meter.
(2) Oil absorption value test: a certain mass of powder sample is placed in a mixing chamber, and then oil (linseed oil or DBP-butyl phthalate) is dripped into the sample at a constant rate, and stirred at the same time with a rotating wing at a constant speed. As the amount of oil absorbed by the sample increases, the mixed material changes from a free-flowing state to a semi-plastic agglomerate; during this process, the viscosity of the mixture gradually increases and a peak value appears. The oil absorption value (mL/100g) of the sample is calculated by adding the amount of oil dripped at 70% of the maximum torque obtained by a torque curve generated by the change in viscosity characteristics at the measurement end point. The instrument used is the S-500 oil absorption value tester of ASAHI SOUKEN of Japan.
(3) Method for removing silicon particles: weigh about 0.5g of the composite negative electrode material sample and place it in a platinum crucible, add a mixed acid of 5mL HNO3 and 10mL HF, and after the mixed acid reacts stably with the sample, place the platinum crucible on a hot plate with 350°C to heat the mixed acid until the hydrofluoric acid evaporates and no white smoke is emitted; after the crucible cools down, add 6mL of HCl and heat until the residue is completely dissolved. The remaining is the composite negative electrode material after removing the silicon particles.
(4) D50 was measured using a laser particle size analyzer. In its volume reference distribution, the cumulative 10% diameter is D10, the cumulative 50% diameter is D50, and the cumulative 90% diameter is D90.
(5) The specific surface area was measured using the American Micromeritics TriStar3000 specific surface area and pore size analyzer.
(6) Micromeretics ASAP 2460 was used for micropore and mesopore analysis. At liquid nitrogen temperature, an equilibrium adsorption amount of nitrogen on a surface of an object is related to its pore size and other characteristics. Combined with a law of a change of adsorption amount with relative pressure during the adsorption process, multiple models can be fitted to calculate the pore size. The report generated by the software uses the density functional theory (abbreviated as DFT) method to calculate a pore size distribution, a total pore volume and a pore volume within a certain range.
(7) The XRD peak was measured using a PANalytical X'pert Pro X-ray diffractometer, and then the Si peak in the XRD was fitted using Jade 6.5 software to obtain the particle size of the Si grains.
(8) Using ²⁹Si MAS NMR standard silicon structure chemical shift: ²⁹Si MAS NMR (²⁹Si Magic AngleSpinning Nuclear Magnetic Resonance Spectroscopy), the instrument model is Bruker AV 300 nuclear magnetic resonance instrument. For quantitative analysis, a single pulse is used during the test instead of the cross-polarization method. A pulse width is 4.5ut, θ is 54.7°, a relaxation delay (i.e. the time delay between two samples) is 5 seconds, and a rotation speed is 7kHz. TMS is used as the chemical shift standard for measurement.
(9) FIB-TEM sample preparation adopts the "lift-out method": the instrument model is FEI Helios G4 CX focused ion/electron dual-beam electron microscope. First, a layer of Pt is deposited on the surface of the sample preparation area (first electron beam deposition, then ion beam deposition) to play a protective role. Then a cross section is etched on one side of the Pt deposited film, and then a cross section is etched on the other side. The sample stage is tilted 45°, the bottom is cut off and returned to the original position, and the film is thinned to the required size of about 0.2µm. The ends of the film are cut off and the sample is taken out using a special pick-up system (under the control of the micro-manipulator, a glass rod with a tip of 0.2µm~0.5µm is close to the sample, and the sample and the tip of the glass rod generate electrostatic interaction, then the sample is attracted to the tip of the glass rod). The sample is placed on a copper mesh with collodion to obtain a TEM sample. TEM uses the Thermo Fisher Spectra S/TEM scanning transmission electron microscope.
(10) EDS line scan: An electron beam performs line scan analysis of the element concentration along a selected straight line trajectory on the sample surface. Draw a straight line from one end of the sample surface to the other end on the cross-sectional image of the sample, and the electron beam scans along the straight line to collect the characteristic X-rays of Si and C elements. The changes in their count values are displayed on the fluorescent screen as curves. The height of the curve reflects the changes in the concentration of the corresponding element along the scanning line. Here, the maximum value of the concentration along the Si scanning line I (Intensities) max is A₁, the minimum value of the concentration along the Si scanning line I (Intensities) min is B₁, and the median value of the concentration along the Si scanning line I (Intensities) med is C₁; the maximum value of the concentration along the C scanning line I (Intensities) max is A₂, the minimum value of the concentration along the C scanning line I (Intensities) min is B₂, and the median value of the concentration along the C scanning line I (Intensities) med is C₂. The EDS spectrometer used is Thermo Fisher NORAN System 7 seventh generation X-ray spectrometer.
(11) SEM (Scanning Electron Microscope) measurement of nanoparticle size: prepare a cross section of the composite negative electrode material and save a SEM image of the cross section. Run Nano Measurer software, open the SEM image of the cross section to be counted, set the scale and drag the mouse to mark the particles on the SEM image to obtain their particle size. Randomly select five 100µm×75µm areas, randomly select 20 nano-Si particles in each area for particle size statistics, and obtain their particle size distribution range. Use origin software to fit the obtained particle size values to a normal distribution, and obtain a mean and a standard deviation. The standard deviation σ≤0.2.
(12) Gravimetric method to test a content of Si: use a box-type atmosphere furnace to burn in an O₂ atmosphere, so that Si in the sample reacts to become SiO₂, and C burns to become CO₂ and is discharged. Weigh and calculate the content of Si.

The present application is further described in detail below with reference to specific Embodiments and Comparative Embodiments.

### Embodiment 1

Material selection: the D50 of the porous carbon used in this embodiment is 7µm, the average pore diameter of the porous carbon is 1.9nm, and the average distance between the pores of the porous carbon is 1.6nm.

1000g of porous carbon was placed in a CVI reactor, and silane at 200°C was injected into the CVI reactor at a rate of 0.5L/min, at the same time, hydrogen at 250°C and high-purity nitrogen at 250°C were injected at a rate of 50L/min and 4.0L/min, respectively, to fully mix the gases and obtain a gas mixture; the gas mixture was heated to about 400°C, and the gas mixture in a turbulent state was allowed to stay in the CVI reactor for 8h, with a total flow rate of 54.5L/min, and then naturally cooled to room temperature to obtain a precursor.

Methane is used as a carbon source, the precursor was placed in a gas-coated rotary kiln, methane gas was introduced, and nitrogen was used as a protective atmosphere, and they were carbonized at 900°C to obtain a composite negative electrode material with an amorphous carbon coating layer.

### Embodiment 2

Material selection: the D50 of the porous carbon used in this embodiment is 12µm, the average pore diameter of the porous carbon is 300nm, and the average distance between the pores of the porous carbon is 90nm.

1000g of porous carbon was placed in a CVI reactor, and silane at 200°Cwas injected into the CVI reactor at a rate of 1.0L/min, at the same time, hydrogen at 250°C and high-purity nitrogen at 250°C were injected at a rate of 79L/min and 20L/min, respectively, to fully mix the gases and obtain a gas mixture; the gas mixture was heated to about 400°C, and the gas mixture in a turbulent state was allowed to stay in the CVI reactor for 10h, with a total flow rate of 100L/min, and then naturally cooled to room temperature to obtain a precursor.

Low-temperature liquid asphalt was used as the carbon source, the precursor and the low-temperature liquid asphalt were fully mixed, then placed in a rotary kiln, methane gas was introduced, and nitrogen was used as a protective atmosphere. They were carbonized at 800°C, and then placed in a kiln for heat treatment at 980°C for 24 hours to obtain a composite negative electrode material with an amorphous carbon coating layer.

### Embodiment 3

Material selection: the D50 of the porous carbon used in this embodiment is 20µm, the average pore diameter is 120nm, and the average distance between the pores is 70nm.

1000g of porous carbon was placed in a CVI reactor, and silane at 200°C was injected into the CVI reactor at a rate of 1.0L/min, at the same time, hydrogen at 250°C and high-purity nitrogen at 250°C were injected at a rate of 150L/min and 2.0L/min, respectively, to fully mix the gases and obtain a gas mixture; the gas mixture was heated to about 400°C, and the gas mixture in a turbulent state was allowed to stay in the CVI reactor for 4h, with a total flow rate of 152.2L/min, and then naturally cooled to room temperature to obtain a precursor.

Glucose was used as the carbon source, the precursor and glucose were fully mixed, then placed in a roller kiln, and carbonized at 980°C using argon as a protective atmosphere, and then placed in a kiln for heat treatment at 1000°C for 18 hours to obtain a composite negative electrode material.

### Embodiment 4

Basically the same as Embodiment 1, except that the rate of silane is 0.4 L/min and a residence time is 6 h.

### Embodiment 5

Basically the same as Embodiment 1, except that: when preparing the precursor, 1000 g of porous carbon was placed in a CVI reactor, silane at 900°C was injected into the CVI reactor at a rate of 0.5L/min, and at the same time hydrogen at 950°C and high-purity nitrogen at 950°C were injected at a rate of 50L/min and 4.0L/min, respectively, to fully mix the gases and obtain a gas mixture; the gas mixture was heated to about 1000°C, the gas mixture in a turbulent state was allowed to stay in the CVI reactor for 8 hours, with a total flow rate of 54.5L/min, and then naturally cooled to room temperature to obtain a precursor.

### Embodiment 6

Basically the same as Embodiment 1, except that: silane at 200°C was injected into the CVI reactor at a rate of 1L/min, and at the same time hydrogen at 250°C and high-purity nitrogen at 250°C were injected at a rate of 50L/min and 0.5L/min, respectively, to fully mix the gases and obtain a gas mixture; the gas mixture was heated to about 400°C, the gas mixture in a turbulent state was allowed to stay in the CVI reactor for 8 hours, with a total flow rate of 51.5L/min.

### Comparative Embodiment 1

Basically the same as Embodiment 1, except that: when preparing the precursor, hydrogen was injected at a rate of 5.0L/min, high-purity nitrogen was injected at a rate of 4.0L/min, a total flow rate of the gas mixture was 54.5L/min, and the gas mixture entering the CVI reactor was not in a turbulent state.

### Comparative Embodiment 2

Basically the same as Embodiment 1, except that: when preparing the precursor, 1000 g of porous carbon was placed in a CVI reactor, silane at 200°C was injected into the CVI reactor at a rate of 2L/min, and at the same time hydrogen at 250°C and high-purity nitrogen at 250°C were injected at a rate of 120L/min and 100L/min, respectively, to fully mix the gases and obtain a gas mixture; the gas mixture was heated to about 400°C, the gas mixture in a turbulent state was allowed to stay in the CVI reactor for 30 hours, with a total flow rate of 222L/min, and then naturally cooled to room temperature.

### Comparative Embodiment 3

Basically the same as Embodiment 1, except that: when preparing the precursor, Si with a D50 of 3µm to 10µm was uniformly mixed with anhydrous ethanol at a mass ratio of 1:10, and a Si slurry with a particle size D50 of 100nm was obtained by ball milling; the above Si slurry and porous carbon were uniformly mixed at a mass ratio of 10:1 and then spray granulated to obtain a precursor.

### Comparative Embodiment 4

Basically the same as Embodiment 1, except that: the precursor was not subjected to carbon coating treatment.

### Comparative Embodiment 5

Basically the same as Embodiment 1, except that: the average pore diameter of the porous carbon is 1200nm, and the average distance between the pores of the porous carbon is 1000nm.

### Comparative Embodiment 6

Basically the same as Embodiment 1, except that: silane at 200°C was injected into the CVI reactor at a rate of 0.1L/min, and hydrogen at 250°C and high-purity nitrogen at 250°C were injected at a rate of 50L/min and 4.0L/min, respectively, to fully mix the gases to obtain a gas mixture; the gas mixture was heated to about 400°C, and the gas mixture in a turbulent state was allowed to stay in the CVI reactor for 8 hours, and a total flow rate of the gas mixture was 54.1 L/min.

### Electrochemical test

The lithium-ion batteries made of the composite negative electrode materials in Embodiments 1 to 4 and Comparative Embodiments 1 to 8 were tested for the first discharge specific capacity, first coulomb efficiency, capacity retention rate after 50 cycles, and electrode thickness expansion rate after 50 cycles.

A test method for the first discharge specific capacity and the first coulombic efficiency is as follows: the composite negative electrode material, conductive carbon black and PAA glue were prepared into a negative electrode slurry at a mass ratio of 75:15:10, coated on copper foil, and dried to form a negative electrode sheet. The metal lithium sheet was used as the counter electrode and assembled into a button cell in a glove box filled with argon. The button cell was charged and discharged at a current density of 0.1C in the charge and discharge range of 0.01V~1.5V to obtain the first discharge specific capacity and the first coulombic efficiency of the button cell.

A test method for the capacity retention rate after 50 cycles and the electrode thickness expansion rate after 50 cycles is as follows: a negative electrode slurry was prepared according to a mass ratio of the composite negative electrode material:Super-P:KS-6:CMC:SBR=92:2:2:2:2, coated on copper foil, and dried to form a negative electrode sheet. The metal lithium sheet was used as the counter electrode and assembled into a button cell in a glove box filled with argon. The button cell was charged and discharged 50 times at a current density of 1C in the charge and discharge range of 0.01V~1.5V to obtain the capacity retention rate and electrode thickness expansion rate of the button cell after 50 cycles.

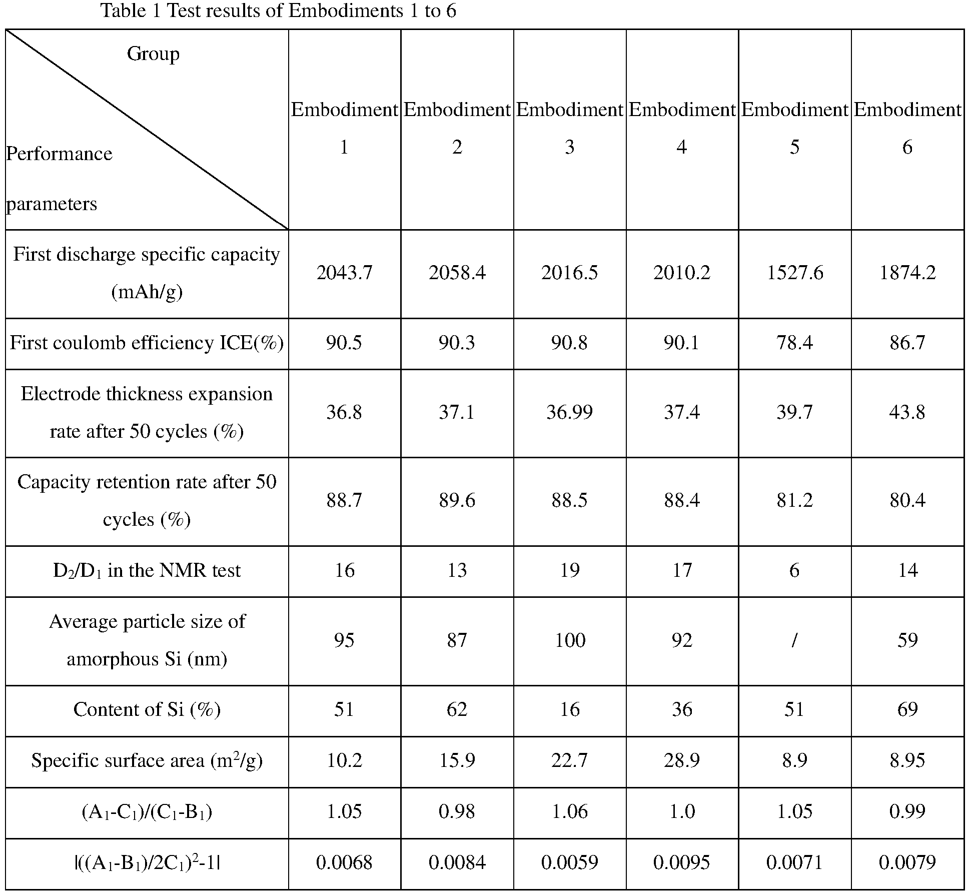

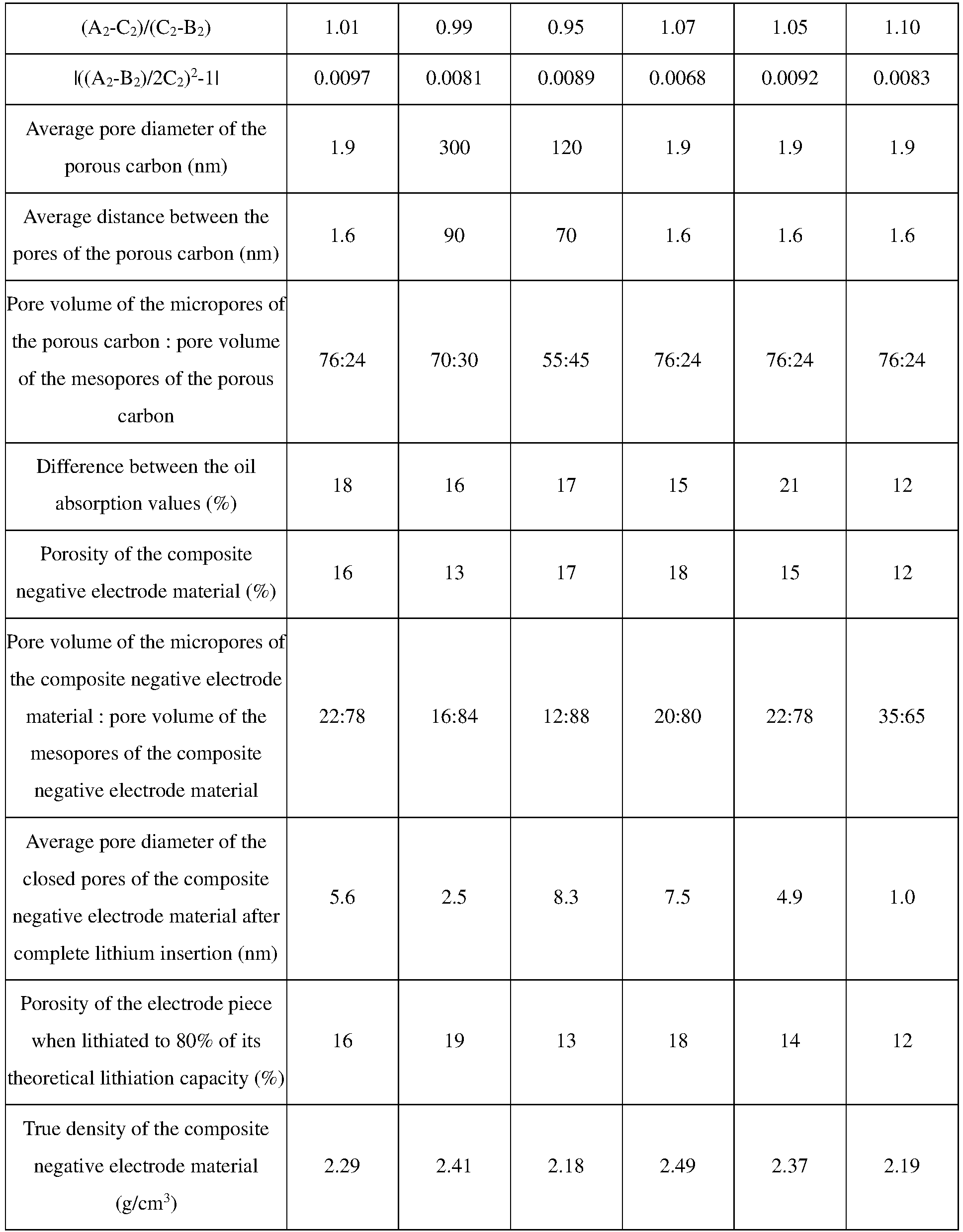

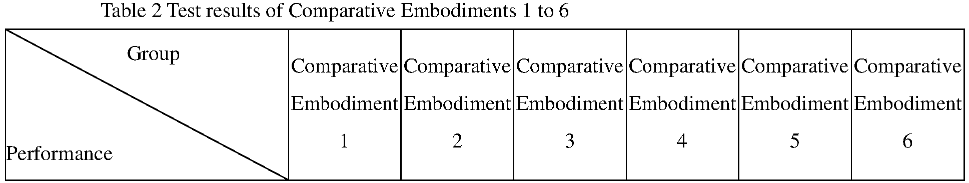

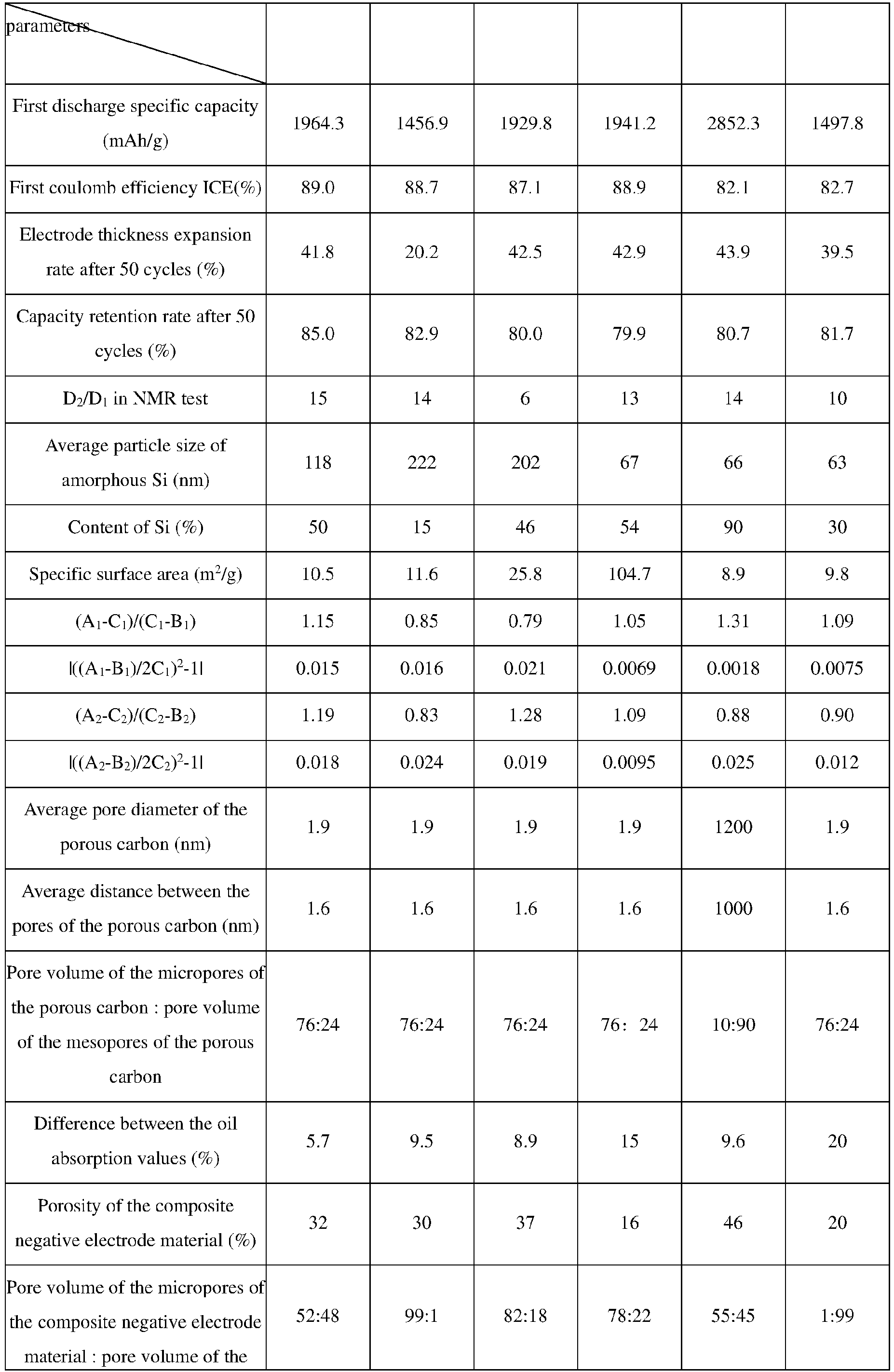

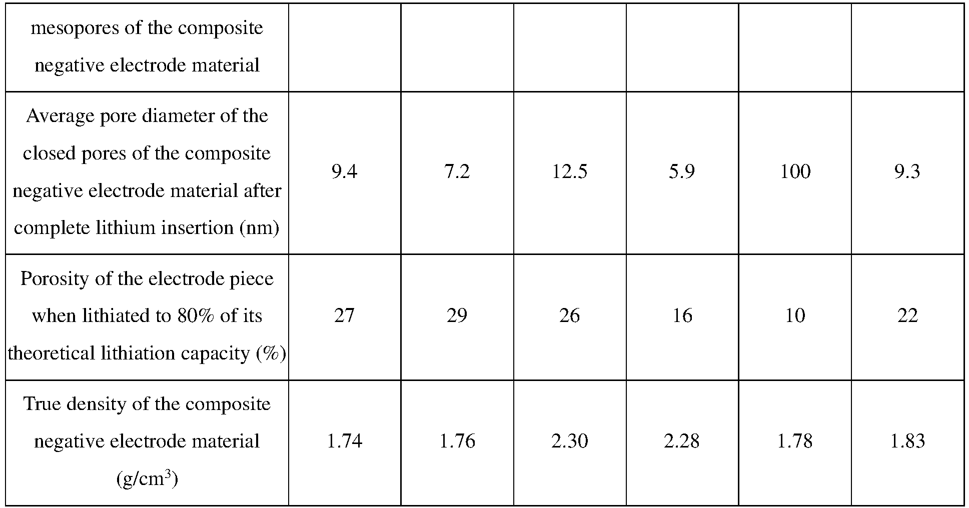

According to the results shown in Tables 1 and 2, the composite negative electrode material prepared in Embodiment 2 has the best comprehensive performance.

Comparing Embodiment 1 with Embodiment 5, the first discharge specific capacity, first coulomb efficiency and capacity retention rate after 50 cycles of the composite negative electrode material of Embodiment 1 are relatively high, and the electrode thickness expansion rate after 50 cycles is relatively low. This is because when the precursor is prepared in Embodiment 1, the temperature of silane, hydrogen, high-purity nitrogen and the gas mixture is appropriate, which inhibits the formation of crystalline Si, and crystalline Si will have expansion anisotropy during the charge and discharge process. Therefore, the composite negative electrode material prepared in Embodiment 1 has a more stable structure and better electrochemical performance.

Comparing Embodiment 1 with Embodiment 6, the micropore volume ratio in the pore volume ratio of micropores to mesopores in the composite negative electrode material prepared in Embodiment 6 is relatively large. Compared with Embodiment 1, the capacity retention rate after 50 cycles, first discharge specific capacity and first coulombic efficiency of the composite negative electrode material prepared in Embodiment 6 are slightly lower than those in Embodiment 1. Therefore, the ratio of the pore volume of micropores to the pore volume of mesopores in the composite negative electrode material is preferably (5-23):(77-95).

SEM and Nano Measurer software were used to measure the particle size of Si particles in the composite negative electrode materials prepared in Embodiment 1 and Comparative Embodiments 1-2. The particle size of Si particles in the composite negative electrode material of Embodiment 1 is less than 100nm, and 70% of the particles have a particle size of 50nm to 80nm. However, the particle size of Si particles formed in Comparative Embodiment 1 is larger, and 70% of the particles have a particle size of 80nm to 150nm. The number of Si particles in the composite negative electrode material in Comparative Embodiment 2 is small, and the particle size of some particles is large. In addition, the capacity retention rate after 50 cycles of the composite negative electrode materials prepared in Comparative Embodiments 1 and 2 is lower than that in Embodiment 1, and the Si particles formed in the composite negative electrode material prepared in Comparative Embodiment 2 are less, and the ICE is lower than that in Embodiment 1. It shows that when the precursor is prepared using CVI technology, its process conditions greatly affect the structure and electrochemical properties of the composite negative electrode material.

Comparing Embodiment 1 and Comparative Embodiment 3, the ICE and capacity retention rate after 50 cycles of the composite negative electrode material of Embodiment 1 are significantly higher than those of Comparative Embodiment 3, and the electrode thickness expansion rate after 50 cycles of the composite negative electrode material of Embodiment 1 is significantly lower than that of Comparative Embodiment 3. This is because the Si atoms in the precursor of Embodiment 1 are uniformly embedded in the porous carbon at the atomic level, which is equivalent to bulk doping modification of the porous carbon material. The Si atoms can form amorphous Si-C bonds with C atoms, and the volume expansion is small during the lithium insertion and extraction process, and the lithium ion conductivity coefficient is high, thereby improving the cycle performance of the material.

Comparing Embodiment 1 with Comparative Embodiment 4, the precursor of Comparative Embodiment 4 was not subjected to carbon coating treatment. The performance of the capacity retention rate after 50 cycles and the electrode thickness expansion rate after 50 cycles of the composite negative electrode material of Embodiment 1 were better than those of Comparative Embodiment 4, indicating that the carbon coating layer on the surface of the precursor can improve the conductivity of the overall material, and the carbon coating layer can prevent the electrolyte from directly contacting the Si particles that may be exposed, thereby improving the cycle performance.

Comparing Embodiment 1 with Comparative Embodiment 5, the silicon content of the composite negative electrode material of Comparative Embodiment 5 is higher. Although the first discharge specific capacity of the material is higher, the capacity retention rate after 50 cycles is lower, and the electrode thickness expansion rate after 50 cycles is higher. This is because the average pore diameter and the average distance between the pores of the porous carbon used in Comparative Embodiment 5 are larger, resulting in the inability to achieve uniform mixing of Si and C in the porous carbon at the nanometer level when Si is infiltrated into the porous carbon using the CVI technology. The segregation of Si and C leads to the degradation of the electrochemical performance of Comparative Embodiment 5; and the insufficient development of the pores of the porous carbon in Comparative Embodiment 5 also leads to a small amount of Si particles deposited in the porous carbon.

The pore volume ratio of micropores to mesopores in the composite negative electrode materials prepared in Embodiment 1 and Comparative Embodiment 6 is quite different. Compared with Embodiment 1, the pore volume ratio of mesopores in the composite negative electrode material prepared in Comparative Embodiment 6 is relatively high. This is because in the vapor deposition process of Comparative Embodiment 6, an introduction rate of silane is low, resulting in insufficient silicon deposited in the pores of porous carbon, a significant decrease in the first discharge specific capacity of the material, and a high pore volume ratio of mesopores in the final negative electrode material.

This shows that the present application can effectively improve the stability of the composite negative electrode material by reasonably designing the pore volume ratio of micropores and mesopores, thereby improving its cycle performance, and at the same time significantly improving the first discharge specific capacity and the first coulombic efficiency.

The technical features of the above-mentioned embodiments can be combined arbitrarily. In order to make the description concise, all possible combinations of the technical features in the above-mentioned embodiments are not described. However, as long as there is no contradiction in the combination of these technical features, they should be considered as the scope of this specification.

The above-mentioned embodiments only express several implementation methods of the present application, and the description is relatively specific and detailed, but it cannot be understood as a limitation on the scope of the patent application. It should be pointed out that for ordinary technicians in this field, several deformations and improvements can be made without departing from the concept of the present application, which all belong to the protection scope of the present application. Therefore, the protection scope of the patent of this application shall be based on the attached claims

## Claims

1. A composite negative electrode material, **characterized in that** the composite negative electrode material comprises an inner core and a coating layer located on at least part of a surface of the inner core, the inner core comprises a porous carbon material and Si particles, the Si particles are distributed on a surface and/or in pores of the porous carbon material;
the composite negative electrode material is provided with micropores and mesopores, wherein a ratio of a pore volume of the micropores to a pore volume of the mesopores is (2-50):(50-98);
an oil absorption value of the composite negative electrode material is less than an oil absorption value of the composite negative electrode material in which removing the Si particles, and based on the oil absorption value of the composite negative electrode material after removing the Si particles being 100%, a difference is greater than or equal to 10%.

2. The composite negative electrode material according to claim 1, **characterized in that**, comprises at least one of following features (1) to (17):
(1) in FIB-TEM test of the composite negative electrode material, a scanning line concentration of EDS satisfies the following relationship: 0.90≤(A₁-C₁)/(C₁-B₁)≤1.10, and |((A₁-B₁)/2C₁)²-1|≤0.01; wherein A₁ is a maximum value of the concentration along the Si scanning line, B₁ is a minimum value of the concentration along the Si scanning line, and C₁ is a median value of the concentration along the Si scanning line;
(2) in FIB-TEM test of the composite negative electrode material, a scanning line concentration of EDS satisfies the following relationship: 0.90≤(A₂-C₂)/(C₂-B₂)≤1.10, and |((A₂-B₂)/2C₂)²-1|≤0.01; where A₂ is a maximum value of the concentration along the C scanning line, B₂ is a minimum value of the concentration along the C scanning line, and C₂ is a median value of the concentration along the C scanning line;
(3) in a ²⁹Si NMR spectrum of the composite negative electrode material, there is a Si-C resonance peak between -10ppm and 20ppm with an intensity of D₁, and there is a Si resonance peak between -90ppm to -110ppm with an intensity of D₂, and D₂/D₁≥10;
(4) the composite negative electrode material contains amorphous Si-C bonds;
(5) an X-ray diffraction spectrum of the composite negative electrode material contains SiC crystal peaks;
(6) a porosity of the composite negative electrode material is 10% to 20%;
(7) when the composite negative electrode material is lithiated to 50% of its theoretical lithiated capacity, a porosity of the electrode piece containing the composite negative electrode material is A1, A1≥30%;
(8) when the composite negative electrode material is lithiated to 70% of its theoretical lithiated capacity, the porosity of the electrode piece containing the composite negative electrode material is A2, 20%≤A2<30%;
(9) when the composite negative electrode material is lithiated to 80% of its theoretical lithiated capacity, the porosity of the electrode piece containing the composite negative electrode material is A3, 10%≤A3<20%;
(10) the ratio of the pore volume of the micropores to the pore volume of the mesopores is (5-23):(77-95);
(11) after complete lithium insertion, an average pore diameter of closed pores of the composite negative electrode material is 0 to10nm;
(12) a mass percentage of Si in the composite negative electrode material is 10% to 90%;
(13) a specific surface area of the composite negative electrode material is 0.5m²/g to 50m²/g;
(14) a true density of the composite negative electrode material is 1.80g/cm³ to 2.90g/cm³;
(15) an average particle size D50 of the composite negative electrode material is 1µm to 25µm;
(16) an average thickness of the coating layer is 1nm to 100nm;
(17) the coating layer comprises a carbon coating layer.

3. The composite negative electrode material according to claim 1 or 2, **characterized in that**, comprises at least one of following features (1) to (9):
(1) an average pore diameter of the porous carbon is **R1,** and a value range of **R1** is 0.2nm to 1000nm;
(2) a volume proportion of pores of 2nm to 100nm in a pore volume of the porous carbon is greater than or equal to 50%;
(3) a ratio of a pore volume of micropores to a pore volume of mesopores in the porous carbon is (50-95): (5-50);
(4) an average distance between the pores of the porous carbon is **H1,** a value range of **H1** is 1nm to 500nm;
(5) an average distance between the pores of the porous carbon H1 is less than or equal to an average pore diameter of the porous carbon R1;
(6) a particle size of the porous carbon is 1µm to 50µm;
(7) the Si particles in the composite negative electrode material comprise amorphous silicon with a particle size range of 1nm to 110nm;
(8) an average particle size of the Si particles in the composite negative electrode material is 1nm to 200nm;
(9) a particle size of Si grains of the composite negative electrode material is 2nm to 10nm, and a standard deviation σ≤0.2.

4. A preparation method for a composite negative electrode material, **characterized in that**, comprises following steps:
using chemical vapor infiltration to deposit Si particles on a surface and/or in pores of porous carbon to obtain a precursor;
performing the precursor by a coating treatment in a protective atmosphere to form a coating layer on a surface of the precursor to obtain a composite negative electrode material;
wherein the composite negative electrode material is provided with micropores and mesopores, and a ratio of a pore volume of the micropores to a pore volume of the mesopores is (2-50):(50-98);
an oil absorption value of the composite negative electrode material is less than an oil absorption value of the composite negative electrode material after removing the Si particles, and based on the oil absorption value of the composite negative electrode material after removing the Si particles being 100%, a difference is greater than or equal to 10%.

5. The preparation method according to claim 4, **characterized in that**, the step of depositing Si particles on the surface and/or in the pores of the porous carbon by chemical vapor infiltration process comprises: providing porous carbon, introducing reaction gas, treating the reaction gas by a thermal decomposition, and depositing Si particles on the surface and/or in the pores of the porous carbon; and comprises at least one of following features (1) to (9):
(1) the reaction gas comprises a gaseous Si source, hydrogen and an inert gas;
(2) a temperature of the thermal decomposition is 300°C to 500°C;
(3) a time of the thermal decomposition is 0.2h to 20h;
(4) a flow rate of the reaction gas is 50L/min to 200L/min;
(5) the reaction gas comprises a gaseous Si source, the gaseous Si source comprises at least one of monosilane, disilane, monochlorosilane, dichlorosilane, trichlorosilane and tetrachlorosilane;
(6) the reaction gas comprises an inert gas, the inert gas comprises at least one of nitrogen, helium, neon and argon;
(7) the reaction gas comprises an inert gas, and a flow rate of the inert gas is 0.2L/min to 50L/min;
(8) a flow ratio of the gaseous Si source to the inert gas is 1:1 to 1:20;
(9) a preparation method of the porous carbon comprises at least one of pyrolysis treatment of the organic carbon source and chemical activation treatment of the organic carbon source.

6. The preparation method according to claim 4, **characterized in that**, the coating treatment comprises following steps: mixing the precursor with a carbon source, and controlling a thermally crack of the carbon source in a protective atmosphere to form a carbon coating layer on the surface of the precursor; and comprises at least one of following features (1) to (14):
(1) a formation method of the carbon coating layer comprises at least one of gas phase carbon coating treatment, solid phase carbon coating treatment and liquid phase carbon coating treatment;
(2) the protective atmosphere comprises at least one of nitrogen, argon, helium, neon, krypton and xenon;
(3) a gas flow rate of the protective atmosphere is 20mL/min to 1000mL/min;
(4) the carbon source comprises a gas phase carbon source;
(5) the carbon source comprises a gaseous carbon source, and the gaseous carbon source comprises a gaseous hydrocarbon carbon source;
(6) the carbon source comprises a gaseous carbon source, and the gaseous carbon source comprises at least one of methane, acetylene, ethylene, ethane, propane, propylene, propyne, acetone and benzene;
(7) the carbon source comprises a solid carbon source;
(8) the carbon source comprises a solid carbon source, and the solid carbon source comprises a solid organic carbon source;
(9) the carbon source comprises a solid carbon source, and the solid carbon source comprises at least one of citric acid, glucose, asphalt, phenolic resin and furfural resin;
(10) the carbon source comprises a liquid carbon source;
(11) the carbon source comprises a liquid carbon source, and the liquid carbon source comprises a liquid organic carbon source;
(12) the carbon source comprises a liquid carbon source, and the liquid carbon source comprises at least one of n-hexane, toluene, benzene, xylene, methanol, ethanol, propanol, butanol, pentanol, acetone, butanone, 2-pentanone, methyl acetate, ethyl acetate, propyl acetate, butyl acetate and amyl acetate;
(13) a temperature of the thermal cracking is 600°C to 1200°C;
(14) a heating rate of the thermal cracking is 0.1°C/min to 50°C/min.

7. The preparation method according to claim 5, **characterized in that**, comprises at least one of following features (1) to (4):
(1) a total pressure of a reaction system formed by the reaction gas is 100kPa to 2000kPa;
(2) a total pressure of a reaction system formed by the reaction gas is 100kPa to 2000kPa, and a partial pressure of the gaseous Si source is 1kPa to 100kPa;
(3) a total pressure of a reaction system formed by the reaction gas is 100kPa to 2000kPa, and a partial pressure of the hydrogen is 50kPa to 1000kPa;
(4) a total pressure of the reaction system formed by the reaction gas is 100kPa to 2000kPa, and a partial pressure of the inert gas is 1kPa to 1000kPa.

8. A negative electrode plate, **characterized in that**, comprises the composite negative electrode material according to any one of claims 1 to 3 or the composite negative electrode material prepared by the preparation method according to any one of claims 4 to 7.

9. A battery, **characterized in that**, comprises the negative electrode plate according to claim 8.

10. An electrical device, **characterized in that**, comprises the battery according to claim 8.
